# EUROPÄISCHE PATENTANMELDUNG

(11) **EP 2 314 888 A2**
(43) Veröffentlichungstag der Anmeldung: **27.04.2011**
(21) Anmeldenummer: 10401170.5
(22) Anmeldetag: 06.10.2010
(51) Int. Cl.: F16B 13/00

(54) **Spreizdübel**

(30) Priorität: 26.10.2009 DE 102009044325
(71) Anmelder: fischerwerke GmbH & Co. KG, 72178 Waldachtal (DE)
(72) Erfinder: Erath, Herbert, 72178 Waldachtal (DE)

(57) **Zusammenfassung**

Die Erfindung betrifft einen Spreizdübel (1) mit einem hülsenförmig ausgebildeten Schaft (2) und einem Spreizbereich (3). Der Schaft (2) weist einen ersten Schraubkanal (8) zur Aufnahme eines Befestigungselements auf. Der Spreizbereich (3) ist mehrteilig ausgebildet, mit einem Aufnahmeteil (4), das mit dem Schaft (2) einstückig verbunden ist und einem Einschubteil (5), das in das Aufnahmeteil (4) einschiebbar ist. Das Aufnahmeteil (4) weist einen zweiten Schraubkanal (9) und das Einschubteil (5) einen dritten Schraubkanal (18) auf, wobei in einem unverspreizten Montagezustand der zweite Schraubkanal (9) zum dritten Schraubkanal (18) versetzt angeordnet ist. Um einen Spreizdübel (1) zu schaffen, der mehrteilig ausgebildet und so stabil ist, dass er beim Eintreiben in ein Bohrloch nicht abknicken kann, schlägt die Erfindung vor, dass das Aufnahmeteil (4) des erfindungsgemäßen Spreizdübels (1) hülsenförmig ausgebildet ist und dass das Aufnahmeteil (4) eine Einschuböffnung (12) für das Einschubteil (5) aufweist.

## Beschreibung

Die Erfindung betrifft einen Spreizdübel mit den Merkmalen des Oberbegriffs des Anspruchs 1.

Spreizdübel sind allgemein bekannt und werden vor allem zur Befestigung von Bauteilen an einem Untergrund verwendet. Ein Spreizdübel wird hierzu in ein im Untergrund erstelltes Bohrloch eingeführt und mittels eines Befestigungselements gespreizt. Mit dem Befestigungselement wird zudem das Bauteil am Untergrund befestigt. Das Befestigungselement ist beispielsweise eine Schraube oder ein Nagel. Typischerweise ist ein gattungsgemäßer Spreizdübel aus Kunststoff hergestellt und weist zumindest einen Schaft und einen Spreizbereich auf. Das Befestigungselement wird durch den Schaft in den Spreizbereich eingebracht, wodurch der Spreizbereich aufgespreizt wird. Das Aufspreizen des Spreizbereichs führt zum reib- und/oder formschlüssigen Verspannen des Spreizdübels im Bohrloch.

Aus der Offenlegungsschrift EP 0 472 851 A2 ist ein Spreizdübel mit einem hülsenförmig ausgebildeten Schaft und einem zweiteilig ausgebildeten Spreizbereich bekannt. Der Schaft ist eine hohlzylindrische Hülse, mit der ein erster Teil des Spreizbereichs, das Aufnahmeteil, einstückig verbunden ist. Das Aufnahmeteil erstreckt sich in Längsrichtung des Spreizdübels und weist eine Vielzahl scheibenartiger Spreizelemente auf. Die scheibenartigen Spreizelemente verlaufen quer zur Längsrichtung des Spreizdübels und sind voneinander beabstandet sowie zueinander parallel. Das Aufnahmeteil dient zur Aufnahme eines Einschubteils, das ebenfalls eine Vielzahl scheibenartiger Spreizelemente aufweist. Die Spreizelemente des Aufnahmeteils und die des Einschubteils korrespondieren derart, dass das Einschubteil in das Aufnahmeteil mittels einer Bewegung quer zur Längsachse des Spreizdübels vollständig eingeschoben werden kann, so dass das Einschubteil in diesem unverspreizten Montagezustand vom Aufnahmeteil aufgenommen ist und der Spreizdübel in ein Bohrloch eingetrieben werden kann. Das Aufnahmeteil bildet mit dem Einschubteil den Spreizbereich des Spreizdübels. Der Schaft weist einen ersten Schraubkanal für das Befestigungselement auf, der in einen zweiten Schraubkanal des Aufnahmeteils beziehungsweise in einen dritten Schraubkanal des Einschubteils übergeht. Im unverspreizten Montagezustand sind der zweite Schraubkanal und der dritte Schraubkanal versetzt zueinander angeordnet, wobei diese beiden Schraubkanäle sich teilweise überdecken. Wird ein Befestigungselement durch den ersten Schraubkanal des Schafts in die Schraubkanäle des Spreizbereichs eingeführt, so werden die Spreizelemente des Aufnahmeteils und des Einschubteils einander entgegengesetzt quer zur Längsrichtung des Spreizdübels bewegt, wodurch der Spreizbereich des Spreizdübels verspreizt.

Nachteilig an der zweiteiligen Ausbildung des Spreizbereichs ist allerdings, dass der Spreizdübel beim Eintreiben in ein Bohrloch relativ leicht abknicken kann. Dieser Nachteil ist in der Offenlegungsschrift EP 0 625 643 A1 beschrieben. Um diesen Nachteil zu vermeiden, wird in der Offenlegungsschrift EP 0 625 643 A1 ein Spreizdübel vorgeschlagen, dessen Einschubteil mit dem Schaft verbunden ist, beispielsweise durch eine formschlüssige Rastverbindung oder eine Klebe- oder Schweißverbindung. Die zusätzlich Verbindung ist allerdings relativ aufwändig und teuer.

Aufgabe der Erfindung ist es daher, eine alternative Ausgestaltung eines Spreizdübels mit mehrteiligen Spreizbereich vorzuschlagen.

Diese Aufgabe wird erfindungsgemäß durch einen Spreizdübel mit den Merkmalen des Anspruchs 1 gelöst. Der erfindungsgemäße Spreizdübel umfasst einen hülsenförmigen Schaft und einen Spreizbereich. "Hülsenförmig" bedeutet, dass der Schaft als eine in Umfangsrichtung im Wesentlichen geschlossene hohlzylindrische Hülse ausgebildet ist, wobei die Hülse nicht notwendigerweise einen kreisringförmigen Querschnitt aufweisen muss. "Hohlzylindrisch" bedeutet in diesem Zusammenhang allgemein, dass der Schaft eine sich im Wesentlichen in Längsrichtung erstreckende Öffnung als ersten Schraubkanal aufweist, in die ein Befestigungselement, beispielsweise eine Schraube oder ein Nagel, in den Spreizdübel eingebracht werden kann.

Der Spreizbereich des erfindungsgemäßen Spreizdübels ist mehrteilig ausgebildet, insbesondere ist er zweiteilig. Der Spreizbereich umfasst ein Aufnahmeteil, das mit dem Schaft einstückig verbunden ist, und ein in das Aufnahmeteil einschiebbares Einschubteil. Das Einschubteil ist insbesondere ein separates, vom Schaft und dem Aufnahmeteil des Spreizdübels getrenntes Bauteil, es kann allerdings auch mit dem Schaft, dem Aufnahmeteil oder einem weiteren Teil des Spreizdübels, insbesondere einstückig, verbunden sein, beispielsweise über eine Lasche oder ein Filmscharnier. Das Aufnahmeteil weist einen zweiten Schraubkanal auf und das Einschubteil einen dritten Schraubkanal. In einem unverspreizten Montagezustand ist der zweite Schraubkanal zum dritten Schraubkanal versetzt angeordnet, wobei sich die beiden Schraubkanäle im Regelfall teilweise überdecken. Der "unverspreizte Montagezustand" ist der Zustand, in dem der Spreizdübel als eine Einheit, mit dem in das Aufnahmeteil eingeschobenen Einschubteil, in ein Bohrloch eingetrieben werden kann und das Befestigungselement noch nicht in den Spreizbereich des Spreizdübels eingebracht ist.

Kennzeichnend für den erfindungsgemäßen Spreizdübel ist, dass das Aufnahmeteil hülsenförmig ausgebildet ist und dass das Aufnahmeteil eine Einschuböffnung für das Einschubteil aufweist. Das Aufnahmeteil ist eine im Wesentlichen über den Umfang geschlossene Hülse, die nur durch eine Einschuböffnung durchbrochen ist. Die Hülse kann auch von mehreren Einschuböffnungen durchbrochen sein, auch wenn im Folgenden von einer Einschuböffnung die Rede ist. Die Erfindung ist nicht auf eine Einschuböffnung beschränkt. Der Querschnitt der Einschuböffnung ist in Bezug auf den Umfang des hülsenförmigen Aufnahmeteils relativ klein und lokal begrenzt, so dass die hülsenförmige Struktur des Aufnahmeteils auch bei einer Vielzahl von Einschuböffnungen im Wesentlichen erhalten bleibt. Auch in diesem Zusammenhang ist "hülsenförmig" nicht auf einen kreisringförmigen Querschnitt des Aufnahmeteils beschränkt. Auf Grund der hülsenförmigen Ausbildung ist das Aufnahmeteil in sich stabil und torsionssteif und knickt daher nicht ab, wenn der Spreizdübel in ein Bohrloch eingetrieben wird. Das hülsenförmige Aufnahmeteil kann mit dem hülsenförmigen Schaft einstückig sein, so dass der gesamte Spreizdübel hülsenförmig ausgestaltet ist, wobei im Spreizbereich die Einschuböffnung für das Einschubteil vorgesehen sind. Die Einschuböffnung ist insbesondere derart ausgestaltet, dass das Einschubteil quer zur Längsachse des Spreizdübels in das Aufnahmeteil eingeschoben werden kann. Bei einem Spreizdübel mit kreisringförmigem Querschnitt des Aufnahmeteils erfolgt das Einschieben somit in radialer Richtung.

Vorzugsweise sind am Aufnahmeteil mehrere Einschuböffnungen angeordnet, die im Wesentlichen die gleiche Orientierung aufweisen und durch Spreizstege voneinander getrennt sind. Durch diese Ausgestaltung ist speziell der Spreizbereich des erfindungsgemäßen Dübels wesentlich stabiler als bei den aus dem Stand der Technik bekannten gattungsgemäßen Spreizdübeln. Insbesondere trägt hierzu die gleiche Orientierung der Einschuböffnung bei, da die hülsenförmige Struktur somit torsionssteif ausgebildet werden kann. Die Spreizstege dienen als Verbindungsbrücken zur Stabilisierung des hülsenförmigen Aufnahmeteils im Bereich der Einschuböffnungen. Zusätzlich wirken die Spreizstege als Spreizelemente, die beim Einführen eines Befestigungselements in den Spreizbereich radial nach außen gespreizt werden.

Bei einer bevorzugten Ausgestaltungsform des erfindungsgemäßen Spreizdübels weist das Einschubteil mehrere Spreizelemente auf. Insbesondere weist das Einschubteil genau so viele Spreizelemente auf wie Einschuböffnungen am Aufnahmeteil angeordnet sind. Vorzugsweise sind die Spreizelemente miteinander verbunden, insbesondere über ein Filmscharnier oder einen Verbindungssteg. Somit kann das Einschubteil mit mehreren Spreizelementen einstückig hergestellt und als ein Stück in die Einschuböffnungen des Aufnahmeteils eingeschoben werden, was eine wirtschaftliche Herstellung und Montage des erfindungsgemäßen Spreizdübels ermöglicht.

Bei einer weiteren bevorzugten Ausgestaltungsform des erfindungsgemäßen Spreizdübels ist im unverspreizten Montagezustand der zweite Schraubkanal des Aufnahmeteils exzentrisch zur Längsachse des Spreizdübels angeordnet. Hierdurch wird erreicht, dass beim Einbringen des Befestigungselements in den zweiten Schraubkanal des Aufnahmeteils auch das Aufnahmeteil oder zumindest Teile des Aufnahmeteils radial nach außen gedrückt werden. Weist der Spreizdübel die oben beschriebenen Spreizstege auf, so sind diese durch die exzentrische Anordnung des zweiten Schraubkanals einseitig verdickt und in der radialen Richtung verstärkt, in der sie beim Einführen des Befestigungselements in den Spreizbereich nach außen gedrückt werden. In einem verspreizten Zustand ist der zweite Schraubkanal des Aufnahmeteils im Wesentlichen konzentrisch mit dem ersten Schraubkanal des Schafts. Vorzugsweise ist der erste Schraubkanal des Schafts konzentrisch zur Längsachse des Spreizdübels. "Konzentrisch" bedeutet in diesem Zusammenhang, dass die Mittelpunkte zweier Kreise, die den zweiten Schraubkanal des Aufnahmeteils beziehungsweise den ersten Schraubkanal des Schafts umschreiben, im Wesentlichen aufeinander liegen.

Die zweiteilige Ausführung des erfindungsgemäßen Spreizdübels hat grundsätzlich den Vorteil, dass das Aufnahmeteil mit dem angeformten Schaft und gegebenenfalls weiteren Bauteilen einstückig und sehr stabil aus einem Kunststoff hergestellt werden kann, das Einschubteil aber aus einem anderen Kunststoff herstellbar ist. Das Einschubteil und das Aufnahmeteil können somit beispielsweise bezüglich der Kunststoffe so gewählt werden, dass der erfindungsgemäße Spreizdübel optimale Halteeigenschaften im Bohrloch aufweist. Beispielsweise ist das Aufnahmeteil aus einem relativ harten Kunststoff gefertigt und das Einschubteil aus einem weicheren Kunststoff hergestellt.

Die Erfindung wird nachfolgend in der Zeichnung anhand eines Ausführungsbeispiels näher erläutert.

Es zeigen:
- Figur 1: den erfindungsgemäßen Spreizdübel in einer perspektivischen Explosionszeichnung;
- Figur 2: den erfindungsgemäßen Spreizdübel in einer Draufsicht;
- Figur 3: den erfindungsgemäßen Spreizdübel in einer Seitenansicht; und
- Figur 4: der Spreizbereich des erfindungsgemäßen Dübels in einer Schnittdarstellung.

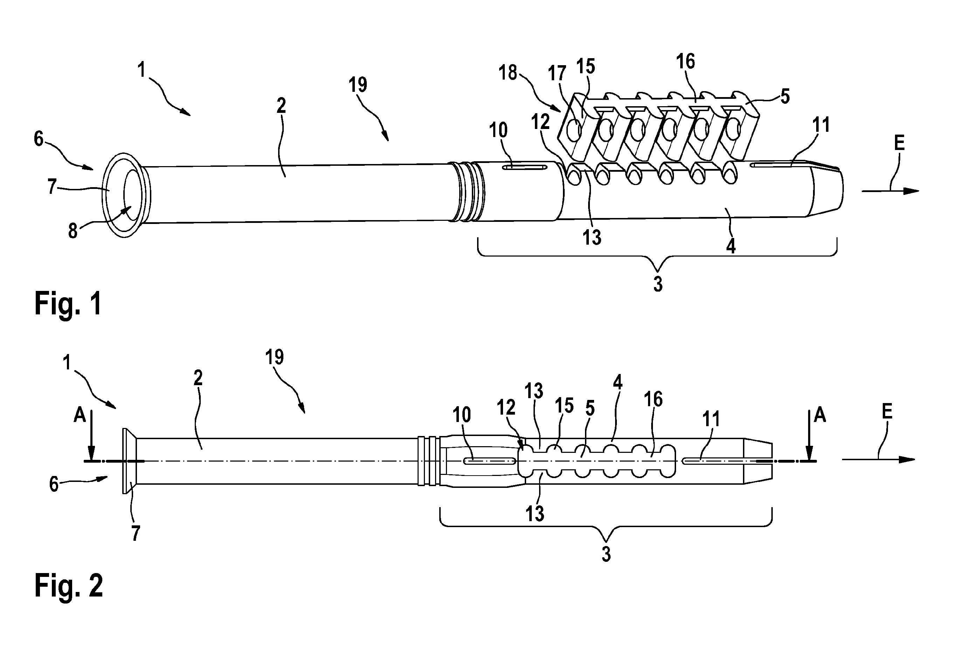

In den Figuren 1 bis 4 ist ein erfindungsgemäßer Spreizdübel 1 dargestellt. Die Figuren 2 bis 4 zeigen den Spreizdübel 1 in einem unverspreizten Montagezustand, in dem der Spreizdübel 1 in ein nicht dargestelltes Bohrloch eintreibbar ist. Der erfindungsgemäße Spreizdübel 1 weist einen Schaft 2 und ein Spreizbereich 3 auf. Der Spreizbereich 3 ist mit einem Aufnahmeteil 4 und einem Einschubteil 5 mehrteilig ausgebildet.

Der Schaft 2 ist als lang gestreckte hohlzylindrische Hülse ausgebildet, wobei der Schaft 2 einen im Wesentlichen kreisringförmigen Querschnitt aufweist. Das bezogen auf die Einsteckrichtung E hintere Ende 6 des Schafts 2 bildet ein bundförmiger Kragen 7. Die "Einsteckrichtung" E ist die Richtung, in die der Spreizdübel 1 in ein nicht dargestelltes Bohrloch eingesteckt wird. Der hohle, innere Teil des Schafts 2 bildet einen ersten Schraubkanal 8, in das ein nicht dargestelltes Befestigungsmittel, beispielsweise eine Schraube, zum Spreizen des Spreizbereichs 3 eingebracht werden kann.

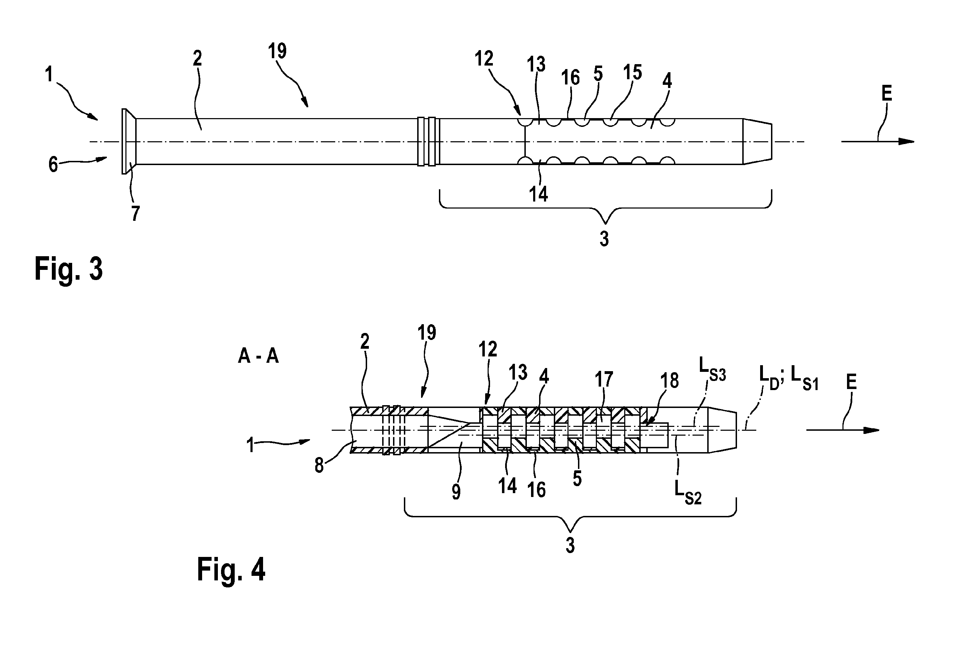

An den Schaft 2 schließt sich in Richtung der Einsteckrichtung E das Aufnahmeteil 4 des Spreizbereichs 3 einstückig an. Das Aufnahmeteil 4 ist ebenfalls als hohlzylindrische Hülse ausgeführt, wobei der hohle Innenraum, der einen zweiten Schraubkanal 9 bildet, exzentrisch zur Längsachse L_{D} des Spreizdübels 1 angeordnet ist. Das Aufnahmeteil 4 weist an seinem hinteren Ende einen ersten Schlitz 10 und an seinem vorderen Ende einen zweiten Schlitz 11 auf, wodurch sich das Aufnahmeteil 4 des Spreizbereichs 3 beim Einbringen des nicht dargestellten Befestigungselements radial weiten lässt. Zwischen den beiden Schlitzen 10, 11 weist das Aufnahmeteil 4 mehrere Einschuböffnungen 12 auf, die das hülsenförmige Aufnahmeteil 4 lokal in radialer Richtung in Figur 3 und 4 von oben nach unten durchdringen. Die Einschuböffnungen 12 sind im Wesentlichen gleich orientiert und durch in Umfangsrichtung verlaufende in Figur 3 und 4 oben liegende Spreizstege 13 und unten liegende Verbindungslaschen 14 voneinander getrennt. Die Spreizstege 13 sind, bedingt durch die exzentrische Lage des zweiten Schraubkanals 9, gegenüber den Verbindungslaschen 14 verstärkt ausgeführt, wodurch ihr Spreizweg vergrößert, ihr Spreizverhalten verbessert und die durch die Spreizstege 13 übertragbare Last vergrößert wird. Auf Grund dieser erfindungsgemäßen Ausgestaltung des Spreizdübels 1 bleibt auch im Bereich der Einschuböffnungen 12 die hülsenförmige Struktur des Aufnahmeteils 4 im Wesentlichen erhalten. Der Spreizdübel 1 ist somit auch im Bereich des Aufnahmeteils 4 stabil und torsionssteif, so dass der Spreizdübel 1 beim Eintreiben in ein nicht dargestelltes Bohrloch nicht ausknickt.

In die Einschuböffnungen 12 des Aufnahmeteils 4 ist das Einschubteil 5 radial, das heißt quer zur Längsachse L_{D} des Spreizdübels 1, einschiebbar. Das Einschubteil 5 weist mehrere Spreizelemente 15 auf, die als quaderförmige Scheiben ausgestaltet sind. Die mehreren Spreizelemente 15 sind über einen als Filmscharnier 16 ausgeführten Verbindungssteg miteinander verbunden. Die Spreizelemente 15 sind zueinander parallel und beabstandet. Die Spreizelemente 15 korrespondieren mit den Einschuböffnungen 12 sowohl hinsichtlich ihrer Anzahl als auch hinsichtlich ihrer geometrischen Ausgestaltung. Die Spreizelemente 15 weisen Öffnungen 17 auf, die außermittig im Spreizelement 15 angeordnet sind und gemeinsam den dritten Schraubkanal 18 bilden. Der zweite Schraubkanal 9 und der dritte Schraubkanal 18 sind beide zueinander versetzt und exzentrisch im Spreizdübel 1 angeordnet. Das heißt, dass die Längsachse L_{S2} des zweiten Schraubkanals 9 und die Längsachse L_{S3} des dritten Schraubkanals 18 im unverspreizten Montagezustand von der Längsachse L_{D} des Spreizdübels 1 beabstandet sind. Dabei ist der Abstand zwischen der Längsachse L_{S2} des zweiten Schraubkanals 9 und der Längsachse L_{S3} des dritten Schraubkanals 18 größer als der Abstand der Längsachse L_{S2} des zweiten Schraubkanals 9 beziehungsweise der Längsachse L_{S3} des dritten Schraubkanals 18 zur Längsachse L_{D} des Spreizdübels 1. Ist das Einschubteil 5 in das Aufnahmeteil 4 eingeschoben, so verbleibt es durch Reibung im Einschubteil 5, bis ein nicht dargestelltes Befestigungselement durch den ersten Schraubkanal 8 des Schafts 2 in den Spreizbereich 3 eingeführt wird. Da sich der zweite Schraubkanal 9 des Aufnahmeteils 4 und der dritte Schraubkanal 18 des Einschubteils 5 teilweise überdecken, wird eine Schraube, die als Befestigungselement durch den ersten Schraubkanal 8 in den Spreizdübel eingeführt wird, mit ihrer Spitze in beide sich an den ersten Schraubkanal 8 anschließende Schraubkanäle, den zweiten Schraubkanal 9 und den dritten Schraubkanal 18, eindringen. Da der erste Schraubkanal 8 des Schafts 2 konzentrisch mit der Längsachse L_{D} des Spreizdübels 1 ist und sowohl der zweite Schraubkanal 9 als auch der dritte Schraubkanal 18 im unverspreizten Montagezustand exzentrisch zur Längsachse L_{D} des Spreizdübels 1 sind, bewirkt das Einführen der Schraube, dass die Spreizstege 13 und die Spreizelemente 15 in entgegengesetzter Richtung radial nach außen bewegt werden, so dass sich die Längsachse L_{S2} des zweiten Schraubkanals 9 und die Längsachse L_{S3} des dritten Schraubkanals 18 in Richtung der Längsachse L_{S1} des ersten Schraubkanals 8 und somit zur Längsachse L_{D} des Spreizdübels 1 bewegt. Der Spreizbereich 3 des Spreizdübels 1 wird dadurch verspreizt und der Spreizdübel 1 in einem nicht dargestellten Bohrloch verankert.

Der Spreizdübel 1 besteht aus Kunststoff, wobei der Schaft 2 und das Aufnahmeteil 4 einstückig als ein Bauteil 19 aus einem harten Kunststoff, beispielsweise Polyamid, gefertigt ist. Das Einschubteil 5 ist aus einem weicheren Kunststoff gefertigt als das erste Bauteil 19. Erfindungsgemäß ist es somit möglich, einen stabilen Spreizdübel 1 zu schaffen, der beim Eintreiben in ein Bohrloch nicht abknickt. Auf Grund seiner Mehrteiligkeit kann eine hinsichtlich der Haltekräfte und Demontage optimierte Materialauswahl für das Bauteil 19 und das Einschubteil 5 mit den Spreizelementen 15 getroffen werden.

### Bezugszeichenliste

### Spreizdübel

- 1: Spreizdübel
- 2: Schaft
- 3: Spreizbereich
- 4: Aufnahmeteil
- 5: Einschubteil
- 6: hinteres Ende des Schafts 2
- 7: bundförmiger Kragen
- 8: erster Schraubkanal
- 9: zweiter Schraubkanal
- 10: erster Schlitz des Aufnahmeteils 4
- 11: zweiter Schlitz des Aufnahmeteils 4
- 12: Einschuböffnung
- 13: Spreizsteg
- 14: Verbindungslasche
- 15: Spreizelement
- 16: Filmscharnier
- 17: Öffnung
- 18: dritter Schraubkanal
- 19: Bauteil
- E: Einsteckrichtung
- L_{D}: Längsachse des Spreizdübels 1
- L_{S1}: Längsachse des ersten Schraubkanals 8
- L_{S2}: Längsachse des zweiten Schraubkanals 9
- L_{S3}: Längsachse des dritten Schraubkanals 18

## Patentansprüche

1. Spreizdübel (1) mit einem hülsenförmig ausgebildeten Schaft (2) und einem Spreizbereich (3),
- wobei der Schaft (2) einen ersten Schraubkanal (8) zur Aufnahme eines Befestigungselements aufweist,
- wobei der Spreizbereich (3) mehrteilig ausgebildet ist, mit einem Aufnahmeteil (4), das mit dem Schaft (2) einstückig verbunden ist und einem Einschubteil (5), das in das Aufnahmeteil (4) einschiebbar ist,
- wobei das Aufnahmeteil (4) einen zweiten Schraubkanal (9) aufweist und das Einschubteil (5) einen dritten Schraubkanal (18) aufweist, und
- wobei in einem unverspreizten Montagezustand der zweite Schraubkanal (9) zum dritten Schraubkanal (18) versetzt angeordnet ist,
**dadurch gekennzeichnet,**
- **dass** das Aufnahmeteil (4) hülsenförmig ausgebildet ist, und
- **dass** das Aufnahmeteil (4) eine Einschuböffnung (12) für das Einschubteil (5) aufweist.

2. Spreizdübel nach Anspruch 1, **dadurch gekennzeichnet, dass** am Aufnahmeteil (4) mehrere Einschuböffnungen (12) angeordnet sind, die im Wesentlichen die gleiche Orientierung aufweisen und durch Spreizstege (13) voneinander getrennt sind.

3. Spreizdübel nach Anspruch 1 oder 2, **dadurch gekennzeichnet, dass** das Einschubteil (5) mehrere Spreizelemente (15) aufweist.

4. Spreizdübel nach Anspruch 3, **dadurch gekennzeichnet, dass** die Spreizelemente (15) miteinander verbunden sind, insbesondere über ein Filmscharnier (16).

5. Spreizdübel nach einem der Ansprüche 1 bis 4, **dadurch gekennzeichnet, dass** der zweite Schraubkanal (9) des Aufnahmeteils exzentrisch zur Längsachse (L_{D}) des Spreizdübels (1) angeordnet ist.

6. Spreizdübel nach einem der Ansprüche 1 bis 4, **dadurch gekennzeichnet, dass** der erste Schraubkanal (8) des Schafts (2) konzentrisch mit der Längsachse (L_{D}) des Spreizdübels (1) ist.
